# EUROPÄISCHE PATENTSCHRIFT

(11) **EP 3 837 951 B1**
(45) Veröffentlichungstag und Bekanntmachung des Hinweises auf die Patenterteilung: **22.05.2024**
(21) Anmeldenummer: 19218095.8
(22) Anmeldetag: 19.12.2019
(51) Int. Cl.: A01D 34/416

(54) **FADENMÄHKOPF MIT RESTFADENANZEIGE**
THREAD HEAD WITH RESIDUAL DISPLAY
TÊTE DE COUPE-FIL POURVUE D'AFFICHAGE DE FIL EN SURPLUS

(43) Veröffentlichungstag der Anmeldung: 23.06.2021
(73) Patentinhaber: Andreas Stihl AG & Co. KG, 71336 Waiblingen (DE)
(72) Erfinder: HOCHE, Florian, 74354 Besigheim (DE)
(74) Vertreter: Karzel, Philipp

(56) Entgegenhaltungen:
- EP-A1- 0 876 750
- WO-A1-2018/153424
- US-A1- 2017 347 523
- US-A1- 2019 110 396
- US-A1- 2019 269 070

## Beschreibung

Die Erfindung betrifft einen Fadenmähkopf zur Montage an einer Antriebswelle eines Freischneiders.

Ein Freischneider dient zum Mähen von Gras, Gestrüpp oder Ähnlichem. Hierzu wird ein Fadenmähkopf mit einem Werkzeug um eine Drehachse des Fadenmähkopfes rotierend angetrieben, wodurch das Gras bei Kontakt mit dem Werkzeug abgeschnitten wird. Als Werkzeug werden Schneidfäden eingesetzt, welche im Betrieb des Fadenmähkopfes einem gewissen Verschleiß unterliegen. Während des Betriebes eines Fadenmähkopfes muss der Schneidfaden mehrfach nachgestellt werden, damit ausreichend Fadenlänge zur Verfügung steht und die Schneidfunktion des Fadenmähkopfes nicht beeinträchtigt wird. Ist der Schneidfaden vollständig von der Fadenspule abgewickelt, muss ein neuer Schneidfaden in den Fadenmähkopf eingesetzt werden.

Es ist von Vorteil, wenn der Bediener in die Lage versetzt wird, einen anstehenden Wechsel des Schneidfadens vorauszusehen. Dies ermöglicht dem Bediener einen Ersatzschneidfaden bereitzuhalten und gegebenenfalls am Einsatzort den Schneidfaden zu wechseln. Der Bediener kann auch bereits im Vorfeld noch vor Beginn eines Betriebseinsatzes den Schneidfaden wechseln, so dass eine Unterbrechung der Arbeiten am Einsatzort nicht notwendig ist.

Aus der WO 2018/153424 A1 ist ein Fadenmähkopf mit einem Mähfaden bekannt, wobei der Mähfaden unterschiedliche farbige Abschnitte umfasst. Anhand der farbigen Abschnitte eines Mähfadens kann der Benutzer erkennen, wieviel Schneidfaden bereits aufgebraucht ist und wann voraussichtlich ein Wechsel des Schneidfadens notwendig ist. Nachteilig an derartigen Systemen ist, dass die Erkennung der Restfadenlänge lediglich in Abhängigkeit des Schneidfadentyps möglich ist.

Aus der US 2019/0269070 A1 ist ein Freischneider mit einem Mähkopf bekannt, wobei der Mähkopf eine Zähleinrichtung der Fadenlänge aufweist. Die auf der Fadenspule noch verbleibende Fadenlänge wird über einen Prozessor ermittelt.

Aus der US 2017/0347523 A1 ist eine automatische Weiterschalteinrichtung für einen Fadenmähkopf offenbart.

Der Erfindung liegt die Aufgabe zugrunde, einen Fadenmähkopf mit einer alternativen Restfadenanzeige zu entwickeln.

Diese Aufgabe wird durch einen Fadenmähkopf gemäß einem der Ansprüche 1 bis 14 gelöst.

Der erfindungsgemäße Fadenmähkopf umfasst eine Fadenspule zum Auf- und Abwickeln eines Schneidfadens, wobei die Fadenspule gegenüber dem Gehäuse eine erste Drehrichtung und eine der ersten Drehrichtung entgegengesetzte zweite Drehrichtung aufweist. Der Fadenmähkopf umfasst eine Zählvorrichtung zur Erfassung der Restfadenlänge. Die Zählvorrichtung ist mit der Fadenspule derart wirkverbunden, dass die Zählvorrichtung bei Drehung der Fadenspule relativ zum Gehäuse in die erste Drehrichtung hochzählt und in die zweite Drehrichtung runterzählt.

Wird der Schneidfaden auf die Fadenspule aufgewickelt, zählt die Zählvorrichtung hoch. Wird der Schneidfaden abgewickelt, dreht sich die Fadenspule gegenüber dem Gehäuse in die zweite Drehrichtung und die Zählvorrichtung zählt runter. Dabei wird der Zählwert durch die Zählvorrichtung zumindest mittelbar angegeben. Dadurch kann der Bediener der Zählvorrichtung entnehmen, wieviel Restschneidfadenlänge sich noch auf der Fadenspule befindet. Die Bestimmung der Restschneidfadenlänge erfolgt unabhängig der Ausgestaltung des Schneidfadens.

Vorzugsweise umfasst die Zählvorrichtung ein Zählwerk, wobei das Zählwerk die Relativdrehung zwischen Fadenspule und Gehäuse bestimmt. Vorteilhaft ist das Zählwerk ein mechanisches, elektronisches oder ein elektromechanisches Zählwerk. Mittels des Zählwerkes können die Relativdrehungen zwischen Fadenspule und Gehäuse gemessen werden, um die der Schneidfaden auf die Fadenspule gewickelt ist.

Es ist vorteilhaft vorgesehen, dass an der Fadenspule des Fadenmähkopfes mindestens ein Betätigungselement vorgesehen ist, wobei das Zählwerk mit jeder Relativdrehung zwischen der Fadenspule und dem Gehäuse durch das mindestens eine Betätigungselement mindestens einmal betätigt wird. So zählt das Zählwerk mit jeder Umdrehung um den Zahlenwert eins hoch bzw. runter. Vorteilhaft können auch mehrere Betätigungselemente vorgesehen sein, wobei das Zählwerk pro Umdrehung einen Zählwert ermittelt, der der Anzahl an Betätigungselementen entspricht.

Das Betätigungselement ist vorzugsweise ein an der Fadenspule angeordnetes Zahnelement. Es ist vorteilhaft vorgesehen, dass das Betätigungselement ein an der Fadenspule angeordneter Zahnkranz ist, wobei das Zählwerk durch den Zahnkranz an der Fadenspule stufenlos betätigbar ist. Durch die Verwendung eines Zahnkranzes ist eine äußerst genaue Bestimmung der Relativdrehung zwischen Fadenspule und Gehäuse und damit der auf die Fadenspule aufgewickelten Schneidfadenlänge möglich.

Es ist vorteilhaft vorgesehen, dass das Betätigungselement ein an der Fadenspule angeordneter Impulsgeber ist, wobei das Zählwerk als Impulszähler zur Erfassung des von dem mindestens einen Impulsgeber ausgehenden Impulses ausgebildet ist. Der Impulszähler ist vorzugsweise als ein optischer Sensor, insbesondere ein induktiver oder ein kapazitiver Näherungssensor ausgebildet. In dieser Ausgestaltung kann der Zählvorgang ohne mechanischen Kontakt zwischen Betätigungselement und dem Zählwerk erfolgen. Das Zählwerk ist vorzugsweise als Drehwinkelgeber ausgebildet. Dadurch kann eine genaue Angabe des Drehwinkels erfolgen.

Die Zählvorrichtung umfasst vorzugsweise ein mit dem Zählwerk gekoppeltes Ausgabeelement, wobei der vom Zählwerk bestimmte Zählwert durch das Ausgabeelement zumindest mittelbar angegeben wird. Das Ausgabeelement ist vorzugsweise für den Bediener des Fadenmähkopfes sichtbar am Gehäuse angeordnet. Dadurch kann der Bediener auch in verbautem Zustand der Fadenspule erkennen, wieviel Restfadenlänge auf der Fadenspule aufgewickelt ist.

Die Zählvorrichtung ist vorzugsweise derart ausgebildet, dass sich die Zählvorrichtung bei abgewickelter Fadenspule in einer Nullstellung befindet. Mit dem Aufwickeln des Schneidfadens zählt das Zählwerk hoch, so dass der Bediener anhand des Ausgabeelementes die aufgewickelte Schneidfadenlänge erkennen kann. Mit Abwickeln der Fadenspule wird also die Fadenspule gegenüber dem Gehäuse in die zweite Drehrichtung gedreht, wobei das Zählwerk runterzählt, bis der Schneidfaden vollständig abgewickelt ist und die Zählvorrichtung die Nullstellung wieder eingenommen hat.

Es ist vorzugsweise vorgesehen, dass die Fadenspule mindestens einen durchgehenden Fadenkanal besitzt, durch den ein Schneidfaden durchgesteckt und aufgewickelt werden kann. Zur Aufwicklung eines Schneidfadens ist dieser in den Fadenkanal hindurchzustecken und anschließend die Fadenspule in eine erste Richtung relativ zum Gehäuse zu drehen. Vorzugsweise umfasst die Fadenspule mindestens zwei Haltevorrichtungen zur Befestigung zweier Schneidfäden. So können an jeder Haltevorrichtung ein Schneidfaden fixiert und die Schneidfäden anschließend aufgewickelt werden.

Weitere Merkmale der Erfindung ergeben sich aus der Beschreibung und der Zeichnung. Nachstehend sind im Einzelnen beschriebene Ausführungsbeispiele wiedergegeben. Es zeigen:
- Fig. 1: eine schematische Darstellung eines von einem Bediener gehaltenen Freischneiders,
- Fig. 2: eine Seitenansicht eines Ausführungsbeispiels eines Fadenmähkopfes mit Restfadenanzeige,
- Fig. 3: eine Schnittdarstellung des Fadenmähkopfes nach Fig. 2,
- Fig. 4: eine schematische Darstellung einer Ausführung eines Fadenmähkopfes mit mechanischem Zählwerk und
- Fig. 5: eine schematische Darstellung einer Ausführung eines Fadenmähkopfes mit elektromechanischem Zählwerk.

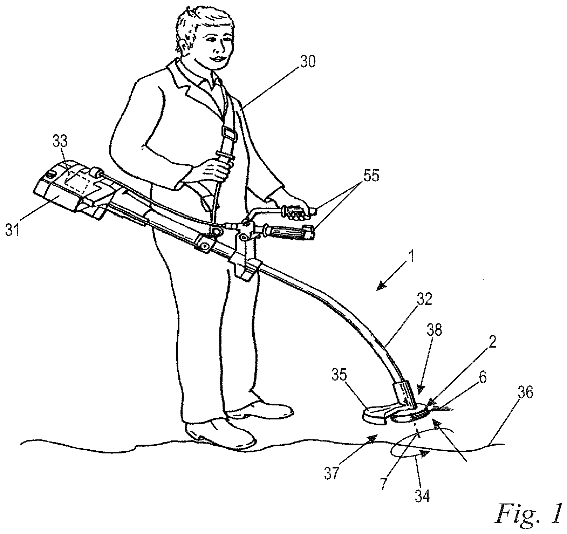

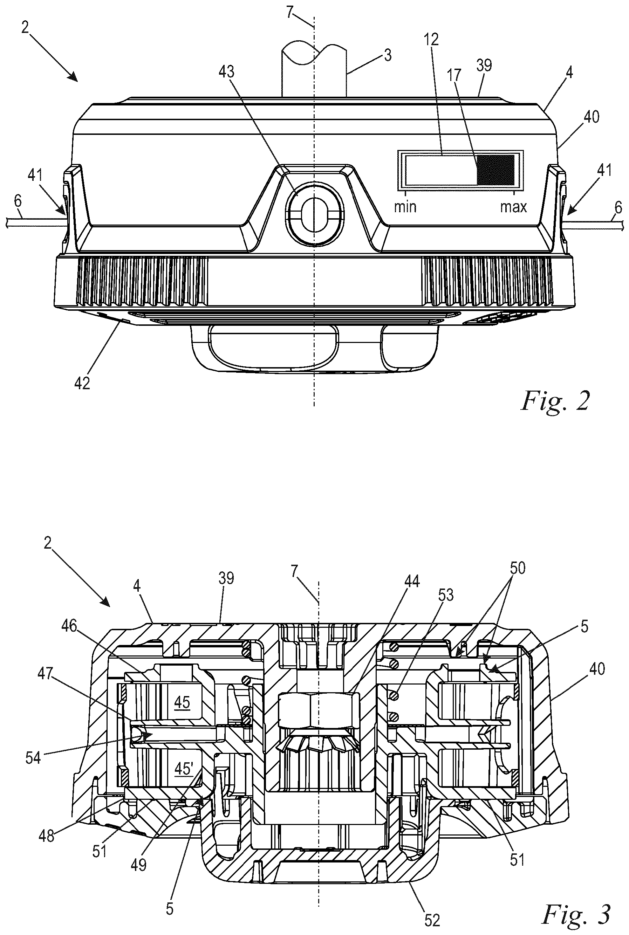

Fig. 1 zeigt in einer schematischen Darstellung einen Freischneider 1. Der Freischneider 1 wird von einem Bediener 30 gehalten. Der Freischneider 1 besitzt ein hinteres Ende mit einem hinteren Gehäuse 31 und ein vorderes Ende, aus dem eine Antriebswelle 3 (Fig. 2) ragt. Ein Schaft 32 verbindet das hintere Ende und das vordere Ende. Im Schaft 32 sind Handgriffe 55 zum Führen des Freischneiders 1 angeordnet. An das vordere Ende des Freischneiders 1 schließt ein Fadenmähkopf 2 an. Der Fadenmähkopf 2 ist an der Antriebswelle 3 befestigt und wird rotierend um eine Drehachse 7 von einem lediglich schematisch angedeuteten Antriebsmotor 33 in eine Arbeitsdrehrichtung 34 angetrieben. Der Antriebsmotor 33 ist im hinteren Gehäuse 31 angeordnet, wobei im Schaft 32 eine Antriebswelle verläuft. Es kann vorgesehen sein, dass die Antriebswelle im Schaft unmittelbar mit der Antriebswelle 3 für den Fadenmähkopf 2 verbunden ist, demnach kein Getriebe zwischengeschaltet ist. In einer alternativen nicht dargestellten Ausführung kann der Antriebsmotor 33, der insbesondere ein Elektromotor ist, auch an einem nicht dargestellten vorderen Gehäuse, das am vorderen Ende angeordnet ist, angeordnet sein. Vorteilhaft befindet sich im vorderen Gehäuse auch ein Getriebe des Fadenmähkopfs 2. Der Fadenmähkopf 2 ist an der im Betrieb dem Bediener 30 zugewandten Seite von einer Schutzhaube 35 abgedeckt. Der Fadenmähkopf 2 besitzt mindestens ein Werkzeug, das im Ausführungsbeispiel als ein Schneidfaden 6 zum Schneiden von Schnittgut wie Gras, Gestrüpp oder dgl. dient. Am Fadenmähkopf 2 ist eine im Betrieb dem Boden 36 zugewandte Unterseite 37 ausgebildet, die an der dem Schaft 32 abgewandten Seite des Fadenmähkopfes 2 angeordnet ist. An der dem Schaft 32 zugewandten Seite des Fadenmähkopfes 2 ist die Oberseite 38 des Fadenmähkopfes 2 ausgebildet. Die vom Bediener 30 zwingend zu tragende Schutzkleidung für den Betrieb des Freischneiders 1 ist in der vereinfachten Darstellung nicht gezeigt.

In Fig. 2 ist der Fadenmähkopf 2 in einer Seitendarstellung gezeigt. Der Fadenmähkopf 2 umfasst eine Drehachse 7, um die der Fadenmähkopf 2 im Betrieb des Freischneiders 1 gedreht wird. Hierzu wird der Fadenmähkopf 2 von der lediglich schematisch dargestellten Antriebswelle 3 angetrieben. Zudem umfasst der Fadenmähkopf 2 ein Gehäuse 4 und eine im Gehäuse 4 angeordnete Fadenspule 5 (Fig. 3 bis 5). Das Gehäuse 4 des Fadenmähkopfes 2 ist topfartig ausgebildet und umfasst im Ausführungsbeispiel ein Dach 39 und eine Umfangswand 40. Das Dach 39 erstreckt sich ausgehend von der Drehachse 7 in radialer Richtung der Drehachse 7. Das Dach 39 ist im Ausführungsbeispiel in etwa senkrecht zur Drehachse 7 des Fadenmähkopfes 2 ausgerichtet. Die Umfangswand 40 grenzt an das Dach 39 an und erstreckt sich in Richtung der Drehachse 7. An der Umfangswand 40 des Gehäuses 4 sind zwei sich gegenüberliegende Fadenöffnungen 41 vorgesehen, durch welche der Schneidfaden 6 aus dem Gehäuse 4 ragt. Der Fadenmähkopf 2 umfasst im Ausführungsbeispiel einen Gehäusedeckel 42, der über zwei Einrastverbindungen 43 an dem Gehäuse 4 befestigt ist. Durch den Gehäusedeckel 42 sind die im Gehäuse 4 angeordneten Bauteile im Gehäuse gehalten und vor Verschmutzung geschützt.

Wie in Fig. 3 gezeigt, ist die Fadenspule 5 gegenüber dem Gehäuse 4 um die Drehachse 7 drehbar gelagert. Die Fadenspule 5 besitzt mindestens eine Spulenkammer 45, 45' zum Aufwickeln eines Schneidfadens 6. Im bevorzugten Ausführungsbeispiel nach Fig. 3 umfasst die Fadenspule 5 zwei in Richtung der Drehachse 7 hintereinander angeordnete Spulenkammern 45, 45', in denen jeweils ein Schneidfaden 6 aufgewickelt werden kann. Die Fadenspule 5 umfasst eine erste Spulenwand 46, eine zweite Spulenwand 48 und eine zwischen der ersten Spulenwand 46 und der zweiten Spulenwand 48 angeordnete Zwischenwand 47. Die Fadenspule 5 umfasst ferner eine Längswand 49, die die erste Spulenwand 46, die Zwischenwand 47 und die zweite Spulenwand 48 miteinander verbindet. Eine der beiden Spulenkammern 45 ist in Richtung der Drehachse 4 durch die erste Spulenwand 46 und die Zwischenwand 47 begrenzt. In radialer Richtung zur Drehachse 4 hin ist die Spulenkammer 45 durch die Längswand 49 begrenzt. Die andere der beiden Spulenkammern 45' ist in Richtung der Drehachse 7 durch die Zwischenwand 47 und die zweite Spulenwand 48 begrenzt. In radialer Richtung zur Drehachse 7 hin ist die andere Spulenkammer 45' durch die Längswand 49 begrenzt.

Zum Aufwickeln des Schneidfadens 6 umfasst die Fadenspule 5 einen durchgehenden Fadenkanal 54, durch den der Schneidfaden 6 hindurchgesteckt und aufgewickelt werden kann. Ein derartiger durchgehender Fadenkanal 54 ermöglicht dem Bediener ein Aufwickeln des Schneidfadens 6 in montiertem Zustand des Fadenmähkopfes 2. In einem solchen Zustand ist die Fadenspule 5 im Gehäuse 4 des Fadenmähkopfes 2 gehalten. Der Bediener steckt den Schneidfaden 6 in den Fadenkanal 54 und richtet diesen derart aus, dass an den jeweiligen Enden des Fadenkanals 54 in etwa gleich lange Restfadenenden aus dem Fadenkanal 54 ragen. Anschließend wird die Fadenspule 5 relativ zum Gehäuse 4 in eine erste Drehrichtung gedreht. Die dann freien Enden des Schneidfadens 6 wickeln sich jeweils in einer der Spulenkammern 45, 45' auf. Im Ausführungsbeispiel ist ein solcher Fadenkanal 54 in der Zwischenwand 47 der Fadenspule 5 vorgesehen.

Anstelle oder ergänzend zu dem Fadenkanal 54 können den Spulenkammern 45, 45' zugeordnete Fadenhalterungen vorgesehen sein, an denen jeweils ein Schneidfaden 6 gehalten werden kann. Der Schneidfaden 6 wird an der Fadenhalterung fixiert und anschließend durch eine relative Drehung der Fadenspule 5 zum Gehäuse 4 auf die Fadenspule 5 in einer Spulenkammer 45, 45' aufgewickelt. Auf diese Weise können mehrere Schneidfäden 6 auf der Fadenspule 5 aufgewickelt werden.

Ist im Betrieb des Fadenmähkopfes 2 der Schneidfaden 6 an seinen Enden abgenutzt, ist dieser zur Verlängerung der aus dem Gehäuse 4 ragenden Enden von der Fadenspule 5 abzuwickeln. Hierzu umfasst der Fadenmähkopf 2 eine Weiterschalteinrichtung 50. Wie in Fig. 3 gezeigt, ist die Weiterschalteinrichtung 50 aus mehreren Verrastungskonturen 51 gebildet. Die Verrastungskonturen 51 bewirken, dass in einer Betriebsstellung des Fadenmähkopfes 2 die Fadenspule 5 mit dem Gehäuse 4 in Arbeitsdrehrichtung 34 drehfest verbunden ist. Zur Abwicklung des Schneidfadens 6 von der Fadenspule 5 ist die drehfeste Verbindung der Verrastungskonturen 51 zwischen Fadenspule 5 und dem Gehäuse 4 aufzuheben und anschließend die Fadenspule 5 in einer der Arbeitsdrehrichtung 34 entgegengesetzten zweiten Drehrichtung 9 um die Drehachse 7 relativ zum Gehäuse 4 zu drehen. Die zweite Drehrichtung 9 ist der ersten Drehrichtung 8 entgegengesetzt. Im Ausführungsbeispiel kann die Verbindung zwischen den Verrastungskonturen 51 durch eine durch den Gehäusedeckel 42 ragende Betätigungsvorrichtung 52 aufgehoben werden. Die Betätigungsvorrichtung 52 ist in Richtung der Drehachse 7 hin zum Dach 39 des Gehäuses 4 zu drücken. Dies kann durch Aufschlagen des Fadenmähkopfes 2 auf den Boden 36 erfolgen. Dabei wird die Fadenspule 5 in Richtung der Drehachse 7 angehoben, wodurch sich die Verrastungskonturen 51 lösen. Das Gehäuse 4 dreht sich weiter, wobei durch das Lösen der Drehverbindung sich die Fadenspule 5 relativ zum Gehäuse 4 dreht und der Schneidfaden 6 abgewickelt wird. Durch ein Federelement 53 wird die Fadenspule 5 nach einer vorbestimmten Winkeldrehung wieder zurück in die Verrastung gedrückt, so dass die Drehverbindung zwischen Fadenspule 5 und Gehäuse 4 wieder hergestellt ist.

In einer alternativen Ausbildung, kann die Weiterschalteinrichtung 50 auch derart ausgestaltet sein, dass zur Aufhebung der Drehverbindung zwischen der Fadenspule 5 und dem Gehäuse 4 die Fadenspule 5 in Richtung weg vom Dach 39 des Gehäuses 4 entlang der Drehachse 7 gezogen werden muss. Anschließend ist die Fadenspule 5 von Hand relativ zum Gehäuse 4 zu drehen, um den Schneidfaden 6 von der Fadenspule 5 zu wickeln.

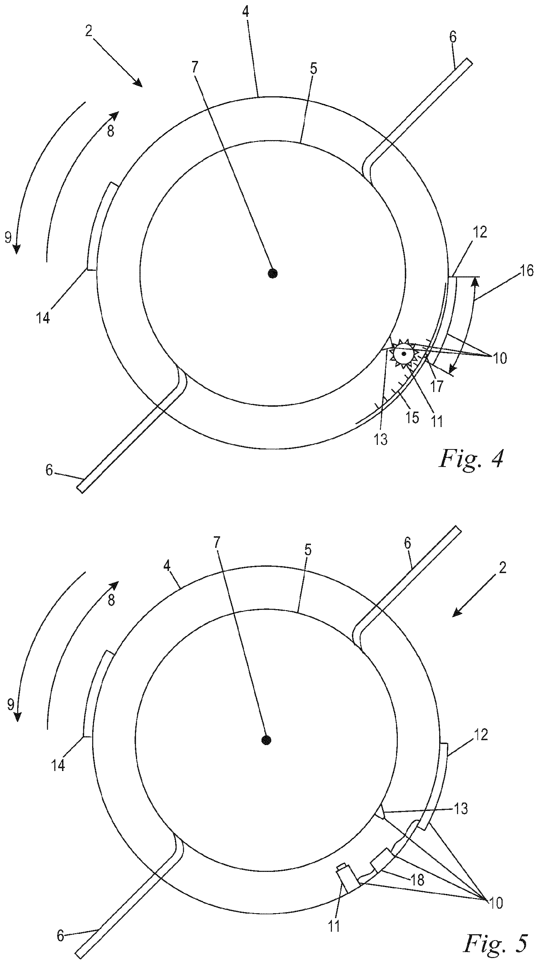

Wie in den Figuren 4 und 5 gezeigt, umfasst der Fadenmähkopf 2 eine Zählvorrichtung 10. Die Zählvorrichtung 10 dient dazu, die Relativdrehung von Gehäuse 4 und Fadenspule 5 zu erfassen und über ein damit gekoppeltes Ausgabeelement 12 dem Bediener anzuzeigen, wieviel Restfadenlänge auf der Fadenspule 5 aufgewickelt ist. Das Ausgabeelement 12 kann mit dem Zählwerk mechanisch, elektromechanisch oder elektronisch gekoppelt sein. Eine Entnahme der Fadenspule 5 aus dem Gehäuse 4 bzw. eine Demontage des Fadenmähkopfes 2 ist hierzu nicht notwendig. Dadurch kann der Bediener auf einfache Weise erfahren, wann voraussichtlich ein neuer Schneidfaden 6 auf die Fadenspule 5 aufzuwickeln ist. Somit ist es dem Bediener möglich, rechtzeitig für einen neuen Schneidfaden zu sorgen.

Zum Aufwickeln des Schneidfadens 6 auf die Fadenspule 5 ist die Fadenspule 5 in die erste Drehrichtung 8 um die Drehachse 7 relativ zum Gehäuse 4 zu drehen. Zum Abwickeln des Schneidfadens 6 von der Fadenspule 5 ist die Fadenspule 5 in die der ersten Drehrichtung entgegengesetzte zweite Drehrichtung 9 zu drehen.

Wie in den Figuren 4 und 5 gezeigt, umfasst die Zählvorrichtung 10 ein Zählwerk 11 und ein mit dem Zählwerk 11 gekoppeltes Ausgabeelement 12. Das Zählwerk 11 ist vorzugsweise am Gehäuse 4 angeordnet. Das Zählwerk 11 ist mit der Fadenspule 5 derart wirkverbunden, dass dieses bei Relativdrehung zwischen Fadenspule 5 und Gehäuse 2 in die erste Drehrichtung 8 hochzählt und in die zweite Drehrichtung 9 runterzählt. Das Zählwerk 11 ist derart ausgebildet, dass sich das Zählwerk 11 in einer Nullstellung befindet, wenn kein Schneidfaden 6 auf der Fadenspule 5 aufgewickelt ist. Zum Aufwickeln des Schneidfadens 6 auf die Fadenspule 5 dreht der Bediener die Fadenspule 5 in montiertem Zustand des Fadenmähkopfes 2 relativ zum Gehäuse 4 in die erste Drehrichtung 8. Dabei zählt das Zählwerk 11 mindestens jede einzelne Relativumdrehung der Fadenspule 5 zum Gehäuse 4. In einer alternativen Ausführung des Fadenmähkopfes 2, kann dieser auch derart aufgebaut sein, dass die Relativbewegung zwischen Fadenspule 5 und Gehäuse 2 zur Aufwicklung des Schneidfadens 6 durch einen Motor, insbesondere durch den Antriebsmotor, bewirkt wird. Wird der Schneidfaden 6 von der Fadenspule 5 abgewickelt, wird die Fadenspule 5 in die zweite Drehrichtung 9 relativ zum Gehäuse 4 gedreht, wobei in dieser Richtung das Zählwerk 11 runterzählt. Der von dem Zählwerk 11 generierte Zählwert wird an das Ausgabeelement 12, welches insbesondere als Anzeigeelement ausgebildet ist, weitergegeben, wobei das Ausgabeelement 12 den Zählwert an den Bediener übermittelt. Der Zählwert wird durch das Ausgabeelement akustisch und/oder optisch wiedergegeben.

Beim Aufwickeln des Schneidfadens 6 erfolgt durch die Zählvorrichtung 10 eine Initialisierung der Länge des Schneidfadens 6. Demnach wird die Länge des Schneidfadens 6 erfasst. Daher ist der Einsatz eines Schneidfadens mit vorbestimmter Länge zur korrekten Erfassung der Restfadenlänge nicht notwendig. Dem Bediener ist es möglich, verschieden lange Schneidfäden zu verwenden.

Das Zählwerk 11 kann ein mechanisches, insbesondere ein elektromechanisches, vorzugsweise ein elektronisches Zählwerk 11 sein. In der Ausgestaltung des Zählwerkes 11 als mechanisches Zählwerk ist vorzugsweise ein Betätigungselement 13, hier ausgebildet als ein Zahnelement, an der Fadenspule 5 vorgesehen, das mit jeder Umdrehung das Zählwerk 11 betätigt. Für die Zählvorrichtung 11 ist ein Ausgleichsgewicht 14 für eine unwuchtfreie Gewichtsverteilung des Fadenmähkopfes 2 vorgesehen. Ein derartiges Ausgleichsgewicht 14 kann durch einfache Beschwerungselemente ausgebildet sein. Auch eine zweite Zählvorrichtung mit Ausgabeelement, die bezüglich der Drehachse 7 symmetrisch zur ersten Zählvorrichtung 10 ausgebildet ist, ist denkbar.

Zudem kann es in einer alternativen, erfindungsgemäßen Ausführung des Fadenmähkopfes 2 zweckmäßig sein, mehrere Betätigungselemente13 an der Fadenspule 5 in Umfangsrichtung der Drehachse 7 zu verteilen, um das Zählwerk 11 mehrfach pro Umdrehung zu betätigen. Mit zunehmender Anzahl an Betätigungselementen 13 ist eine exaktere Bestimmung der Restfadenlänge möglich. Alternativ kann anstelle einzelner Zahnelemente ein Zahnkranz an der Fadenspule 5 vorgesehen sein, der in Wirkverbindung mit dem Zählwerk 11 steht. Vorzugsweise ist zwischen dem Zählwerk 11 und dem Zahnkranz ein Getriebe vorgesehen, so dass eine stufenlose Bestimmung der Restfadenlänge möglich ist. Das Zählwerk 11 ist in der Fig. 4 schematisch als ein am Gehäuse 4 gelagertes Zahnrad dargestellt. Selbstverständlich können als Zählwerk 11 typische Zählwerke wie Rollenzählwerke, Mengenzählwerke eingesetzt werden.

In einem alternativen Ausführungsbeispiel des Fadenmähkopfes 2 kann das Zählwerk der Zählvorrichtung 10 als ein elektromechanisches oder elektronisches Zählwerk ausgebildet sein. Wie in Fig. 5 gezeigt, kann das an der Fadenspule 5 vorgesehene Betätigungselement 13 auch als ein Impulsgeber ausgebildet sein. Das Zählwerk 11 ist als Impulszähler ausgebildet. Der Impulszähler kann ein induktiver Näherungssensor, ein kapazitiver Näherungssensor oder auch ein optischer Sensor sein. Zur genaueren Auflösung und Bestimmung der Restfadenlänge kann auch ein Drehzahlgeber als Zählwerk 11 vorgesehen sein. Zur Bestimmung, ob sich die Fadenspule 5 in eine erste Drehrichtung 8 oder eine zweite Drehrichtung 9 dreht, ist der Impulsgeber vorzugsweise derart ausgebildet, dass der detektierte Impuls ungleichförmig ausgebildet ist. Damit kann anhand des Impulssignals die Drehrichtung der Fadenspule 5 erkannt werden.

Wie in den Figuren 4 und 5 gezeigt, ist das Ausgabeelement 12 am Gehäuse 4 angeordnet. Im Ausführungsbeispiel ist das Ausgabeelement 12 an der Umfangswand 46 des Gehäuses 4 angeordnet. Es kann jedoch auch zweckmäßig sein, das Ausgabeelement 12 auf dem Dach 45 des Gehäuses 4 anzuordnen. Das Ausgabeelement 12 ist an dem Gehäuse 4 derart angeordnet, dass es für den Bediener möglich ist, das Ausgabeelement 12 in montiertem Zustand des Fadenmähkopfes 2 zu erkennen, so dass der Bediener von im Anzeigeelement 12 dargestellten Informationen auf die Restfadenlänge des Schneidfadens 6 rückschließen kann.

Wie in den Figuren 4 und 5 gezeigt, ist das Ausgabeelement 12 zur Anzeige der Restfadenlänge mit dem Zählwerk 11 gekoppelt. Bei einer mechanischen Zählvorrichtung 10 kann das Ausgabeelement 12 beispielsweise ein Schieberelement 15 umfassen. Das Schieberelement 15 wird über das Zählwerk 11 verschoben. Auf dem Schieberelement 15 ist eine Markierung 17 vorgesehen. Über einen Anzeigebereich 16 des Ausgabeelementes 12 kann der Bediener das Schieberelement 15 einsehen. Anhand der Position der auf dem Schieberelement 15 vorgesehenen Markierung 17 kann der Bediener erkennen, wieviel Restfadenlänge des Schneidfadens 6 auf der Fadenspule 5 aufgewickelt ist. Der Anzeigebereich 16 kann beispielsweise durch eine im Gehäuse 4 vorgesehene Öffnung oder durch einen transparenten Gehäuseausschnitt gebildet sein. Die Markierung 17 des Schieberelementes 15 kann auch durch eine Kombination verschiedener Farbstufen des Schieberelementes 15, beispielsweise grün, gelb, rot, gebildet sein. Auch andere Markierungen 17, die den Bediener die Restfadenlänge erkennen lassen, sind denkbar. Anstelle einer Markierung 17 können auch Ziffern vorgesehen sein, die die Anzahl der Betätigungen oder die verbleibende Restfadenlänge in einer Maßeinheit wiedergeben. In dieser Ausführungsvariante ist das Ausgabeelement 12 mit dem Zählwerk 11 mechanisch gekoppelt. Das Schieberelement 15, dessen Markierung 17 sowie der Anzeigebereich 16 sind Bestandteile des Ausgabeelementes 12.

Wie in Fig. 5 gezeigt ist, werden bei einem elektromechanischen Zählwerk 11 die gezählten Impulse über eine Steuereinheit 18 verarbeitet und an das Ausgabeelement 12 weitergeleitet. Das Ausgabeelement 12 ist in dieser Ausführungsform vorzugsweise als ein Digitaldisplay ausgebildet. Die vom Zählwerk 11 erfassten Impulse werden als Zahlenwert ausgegeben.

Alternativ kann eine Umrechnung über den Durchmesser der Fadenspule 5 auf die tatsächliche Restfadenlänge erfolgen, so dass das Ausgabeelement 12 die Restfadenlänge als Längeneinheit angibt.

In einer alternativen Ausführung kann es zweckmäßig sein, den Fadenmähkopf 2 derart auszubilden, dass das Zählwerk 11 mit der Fadenspule 5 fest verbunden und das Betätigungselement 13 mit dem Gehäuse 4 festverbunden ist.

## Patentansprüche

1. Fadenmähkopf zur Montage an einer Antriebswelle (3) eines Freischneiders (1), umfassend ein Gehäuse (4) und eine Fadenspule (5), wobei die Fadenspule (5) gegenüber dem Gehäuse (4) um eine Drehachse (7) drehbar gelagert ist, wobei der Fadenmähkopf (2) eine Zählvorrichtung zur Erfassung der Restfadenlänge umfasst,
**dadurch gekennzeichnet, dass** die Fadenspule (5) zum Auf- und Abwickeln eines Schneidfadens (6) vorgesehen ist, und dass die Fadenspule (5) gegenüber dem Gehäuse (4) eine erste Drehrichtung (8) und eine der ersten Drehrichtung (8) entgegengesetzte zweite Drehrichtung (9) aufweist,
wobei die Zählvorrichtung (10) mit der Fadenspule (5) derart wirkverbunden ist, dass die Zählvorrichtung (10) bei Drehung der Fadenspule (5) relativ zum Gehäuse (4) in die erste Drehrichtung (8) hochzählt und in die zweite Drehrichtung (9) runterzählt.

2. Fadenmähkopf nach Anspruch 1,
**dadurch gekennzeichnet, dass** die Zählvorrichtung (10) ein Zählwerk (11) umfasst, wobei das Zählwerk (11) die Relativdrehung zwischen der Fadenspule (5) und dem Gehäuse (4) bestimmt.

3. Fadenmähkopf nach Anspruch 1 oder 2,
**dadurch gekennzeichnet, dass** das Zählwerk (11) ein mechanisches, elektronisches oder ein elektromechanisches Zählwerk (11) ist.

4. Fadenmähkopf nach einem der Ansprüche 1 bis 3,
**dadurch gekennzeichnet, dass** an der Fadenspule (5) mindestens ein Betätigungselement (13) vorgesehen ist, wobei das Zählwerk (11) mit jeder Relativdrehung zwischen der Fadenspule (5) und dem Gehäuse (4) durch das mindestens eine Betätigungselement (13) mindestens einmal betätigt wird.

5. Fadenmähkopf nach einem der Ansprüche 1 bis 4,
**dadurch gekennzeichnet, dass** das Betätigungselement (13) ein an der Fadenspule (5) angeordnetes Zahnelement ist.

6. Fadenmähkopf nach einem der Ansprüche 1 bis 5,
**dadurch gekennzeichnet, dass** das Betätigungselement (13) ein an der Fadenspule (5) angeordneter Zahnkranz ist, wobei das Zählwerk (11) durch den Zahnkranz an der Fadenspule (5) stufenlos betätigbar ist.

7. Fadenmähkopf nach einem der Ansprüche 1 bis 4,
**dadurch gekennzeichnet, dass** das Betätigungselement (13) ein an der Fadenspule (5) angeordneter Impulsgeber ist, wobei das Zählwerk (11) als Impulszähler zur Erfassung des von dem mindestens einen Impulsgeber ausgehenden Impulses ausgebildet ist.

8. Fadenmähkopf nach Anspruch 7,
**dadurch gekennzeichnet, dass** der Impulszähler als optischer Sensor, induktiver oder kapazitiver Näherungssensor ausgebildet ist.

9. Fadenmähkopf nach Anspruch 7 oder 8,
**dadurch gekennzeichnet, dass** das Zählwerk (11) als Drehwinkelgeber ausgebildet ist.

10. Fadenmähkopf nach Anspruch 1 bis 9,
**dadurch gekennzeichnet, dass** die Zählvorrichtung (10) ein mit dem Zählwerk (1) gekoppeltes Ausgabeelement (12) umfasst, wobei der vom Zählwerk (11) bestimmte Zählwert durch das Ausgabeelement (12) zumindest mittelbar angegeben wird.

11. Fadenmähkopf nach Anspruch 10,
**dadurch gekennzeichnet, dass** das Ausgabeelement (12) für den Bediener (30) des Fadenmähkopfes (5) sichtbar am Gehäuse (4) angeordnet ist.

12. Fadenmähkopf nach einem der Ansprüche 1 bis 11,
**dadurch gekennzeichnet, dass** die Zählvorrichtung (10) derart ausgebildet ist, dass sich die Zählvorrichtung (11) bei abgewickelter Fadenspule (5) in einer Nullstellung befindet.

13. Fadenmähkopf nach einem der Ansprüche 1 bis 12,
**dadurch gekennzeichnet, dass** die Fadenspule (5) mindestens einen durchgehenden Fadenkanal (54) besitzt, durch den ein Schneidfaden (6) hindurchgesteckt und aufgewickelt werden kann.

14. Fadenmähkopf nach einem der Ansprüche 1 bis 13,
**dadurch gekennzeichnet, dass** die Fadenspule (5) mindestens zwei Haltevorrichtungen zur Befestigung mindestens zweier Schneidfäden (6) besitzt.

## Claims

1. Trimmer thread head for assembly on a drive shaft (3) of a brush cutter (1), comprising a housing (4) and a thread reel (5), wherein the thread reel (5) is mounted rotatably about a rotation axis (7) in relation to the housing (4), wherein the trimmer thread head (2) comprises a counting device for detecting the residual thread length,
**characterized in that** the thread reel (5) is provided for winding up and unwinding a trimming thread (6), and **in that** the thread reel (5), in relation to the housing (4), has a first rotation direction (8) and a second rotation direction (9) which is counter to the first rotation direction (8),
wherein the counting device (10) is operatively connected to the thread reel (5) in such a manner that the counting device (10), during rotation of the thread reel (5) relative to the housing (4), in the first rotation direction (8) counts in increments and in the second rotation direction (9) counts in decrements.

2. Trimmer thread head according to Claim 1,
**characterized in that** the counting device (10) comprises a counter (11), wherein the counter (11) determines the relative rotation between the thread reel (5) and the housing (4).

3. Trimmer thread head according to Claim 1 or 2,
**characterized in that** the counter (11) is a mechanical, electronic or an electromechanical counter (11).

4. Trimmer thread head according to one of Claims 1 to 3,
**characterized in that** at least one activation element (13) is provided on the thread reel (5), wherein the counter (11) is activated at least once by the at least one activation element (13) with each relative rotation between the thread reel (5) and the housing (4).

5. Trimmer thread head according to one of Claims 1 to 4,
**characterized in that** the activation element (13) is a toothed element disposed on the thread reel (5).

6. Trimmer thread head according to one of Claims 1 to 5,
**characterized in that** the activation element (13) is a gear rim disposed on the thread reel (5), wherein the counter (11) is able to be activated in a stepless manner by the gear rim on the thread reel (5).

7. Trimmer thread head according to one of Claims 1 to 4,
**characterized in that** the activation element (13) is a pulse generator disposed on the thread reel (5), wherein the counter (11) is designed as a pulse counter for detecting the pulse emanating from the at least one pulse generator.

8. Trimmer thread head according to Claim 7,
**characterized in that** the pulse counter is designed as an optical sensor, inductive or capacitive proximity sensor.

9. Trimmer thread head according to Claim 7 or 8,
**characterized in that** the counter (11) is designed as a rotation angle encoder.

10. Trimmer thread head according to Claims 1 to 9,
**characterized in that** the counting device (10) comprises an output element (12) coupled to the counter (11), wherein the numeral value determined by the counter (11) is at least indirectly indicated by the output element (12).

11. Trimmer thread head according to Claim 10,
**characterized in that** the output element (12) is disposed on the housing (4) so as to be visible to the operator (30) of the trimmer thread head (5).

12. Trimmer thread head according to one of Claims 1 to 11,
**characterized in that** the counting device (10) is designed in such a manner that the counting device (10) is in a zero position when the thread reel (5) is unwound.

13. Trimmer thread head according to one of Claims 1 to 12,
**characterized in that** the thread reel (5) has at least one continuous thread duct (54) through which a trimming thread (6) can be inserted and wound up.

14. Trimmer thread head according to one of Claims 1 to 13,
**characterized in that** the thread reel (5) has at least two holding devices for fastening at least two trimming threads (6).

## Revendications

1. Tête faucheuse à fil destinée à être montée sur un arbre d'entraînement (3) d'une débroussailleuse (1), comprenant un boîtier (4) et une bobine de fil (5), la bobine de fil (5) étant montée de manière rotative autour d'un axe de rotation (7) par rapport au boîtier (4), la tête faucheuse à fil (2) comprenant un dispositif de comptage servant à la détection de la longueur résiduelle de fil,
**caractérisée en ce que** la bobine de fil (5) est prévue pour l'enroulement et le déroulement d'un fil de coupe (6), et **en ce que** la bobine de fil (5) présente un premier sens de rotation (8) et un deuxième sens de rotation (9) opposé au premier sens de rotation (8) par rapport au boîtier (4),
le dispositif de comptage (10) étant relié de manière fonctionnelle à la bobine de fil (5) de telle sorte que le dispositif de comptage (10) compte de manière croissante lors de la rotation de la bobine de fil (5) par rapport au boîtier (4) dans le premier sens de rotation (8) et compte de manière décroissante dans le deuxième sens de rotation (9).

2. Tête faucheuse à fil selon la revendication 1,
**caractérisée en ce que** le dispositif de comptage (10) comprend un compteur (11), le compteur (11) déterminant la rotation relative entre la bobine de fil (5) et le boîtier (4).

3. Tête faucheuse à fil selon la revendication 1 ou 2,
**caractérisée en ce que** le compteur (11) est un compteur (11) mécanique, électronique ou électromécanique.

4. Tête faucheuse à fil selon l'une des revendications 1 à 3,
**caractérisée en ce qu'**au moins un élément d'actionnement (13) est prévu au niveau de la bobine de fil (5), le compteur (11) étant actionné au moins une fois par l'au moins un élément d'actionnement (13) pour chaque rotation relative entre la bobine de fil (5) et le boîtier (4).

5. Tête faucheuse à fil selon l'une des revendications 1 à 4,
**caractérisée en ce que** l'élément d'actionnement (13) est un élément denté disposé au niveau de la bobine de fil (5).

6. Tête faucheuse à fil selon l'une des revendications 1 à 5,
**caractérisée en ce que** l'élément d'actionnement (13) est une couronne dentée disposée au niveau de la bobine de fil (5), le compteur (11) pouvant être actionné de manière continue par la couronne dentée au niveau de la bobine de fil (5).

7. Tête faucheuse à fil selon l'une des revendications 1 à 4,
**caractérisée en ce que** l'élément d'actionnement (13) est un générateur d'impulsions disposé au niveau de la bobine de fil (5), le compteur (11) étant réalisé sous forme de compteur d'impulsions servant à la détection de l'impulsion émise par l'au moins un générateur d'impulsions.

8. Tête faucheuse à fil selon la revendication 7,
**caractérisée en ce que** le compteur d'impulsions est réalisé sous forme de capteur optique, de capteur de proximité inductif ou de capteur de proximité capacitif.

9. Tête faucheuse à fil selon la revendication 7 ou 8,
**caractérisée en ce que** le compteur (11) est réalisé sous forme de capteur d'angle de rotation.

10. Tête faucheuse à fil selon les revendications 1 à 9,
**caractérisée en ce que** le dispositif de comptage (10) comprend un élément de sortie (12) couplé au compteur (11), la valeur de comptage déterminée par le compteur (11) étant indiquée au moins indirectement par l'élément de sortie (12).

11. Tête faucheuse à fil selon la revendication 10,
**caractérisée en ce que** l'élément de sortie (12) est disposé sur le boîtier (4) de manière à pouvoir être vu par l'opérateur (30) de la tête faucheuse à fil (5).

12. Tête faucheuse à fil selon l'une des revendications 1 à 11,
**caractérisée en ce que** le dispositif de comptage (10) est réalisé de telle sorte que le dispositif de comptage (10) se trouve dans une position zéro lorsque la bobine de fil (5) est déroulée.

13. Tête faucheuse à fil selon l'une des revendications 1 à 12,
**caractérisée en ce que** la bobine de fil (5) possède au moins un canal pour fil (54) continu, à travers lequel un fil de coupe (6) peut être introduit et enroulé.

14. Tête faucheuse à fil selon l'une des revendications 1 à 13,
**caractérisée en ce que** la bobine de fil (5) possède au moins deux dispositifs de retenue servant à la fixation d'au moins deux fils de coupe (6).
